Europäisches Patentamt

European Patent Office

Office européen des brevets

(19)

(11) Veröffentlichungsnummer: **0 301 526 B1**

(12) **EUROPÄISCHE PATENTSCHRIFT**

(45) Veröffentlichungstag der Patentschrift: **07.10.92**

(51) Int. Cl.⁵: **H01S  3/06**

(21) Anmeldenummer: **88112173.5**

(22) Anmeldetag: **27.07.88**

(54) **Festkörperlaser-Stab.**

(30) Priorität: **29.07.87 DE 3725144**

(43) Veröffentlichungstag der Anmeldung:
**01.02.89 Patentblatt  89/05**

(45) Bekanntmachung des Hinweises auf die
Patenterteilung:
**07.10.92 Patentblatt  92/41**

(84) Benannte Vertragsstaaten:
**CH ES FR GB IT LI**

(56) Entgegenhaltungen:
**FR-A- 1 356 934**
**FR-A- 1 361 121**
**US-A- 3 530 397**

**SOVIET JOURNAL OF OUANTUM ELECTRO-**
**NICS, Band 1, Nr. 4, Januar/Februar 1972,**
**Seiten 369-375; E.I. KAMENSKII et al.: "Lasers**
**with polyhedral energy guides"**

(73) Patentinhaber: **Carl Baasel Lasertechnik**
**GmbH**
**Petersbrunner Strasse 1b**
**W-8130 Starnberg(DE)**

(72) Erfinder: **Langhans, Lutz, Dr.**
**Fasanenweg 25**
**W-8130 Starnberg(DE)**

(74) Vertreter: **Klunker . Schmitt-Nilson . Hirsch**
**Winzererstrasse 106**
**W-8000 München 40(DE)**

## Beschreibung

Die Erfindung betrifft einen Festkörperlaser.

Für die Materialbearbeitung werden hauptsächlich Gaslaser ($CO_2$) und Festkörperlaser (Nd-YAG oder Nd-Glas) eingesetzt. $CO_2$-Laser haben den Vorteil einer möglichen größeren Leistung (ca. 20 kW sind kommerziell erhältlich). Festkörperlaser zeichnen sich insbesondere durch ihre kompakte Bauweise, einen kleineren erreichbaren Fokus und eine kürzere Wellenlänge aus. Da die Wellenlänge beim Festkörperlaser im Bereich nahe IR-Licht liegt, kann mit Glasoptik gearbeitet werden. Nachteilig bei den Festkörperlasern sind der geringe Wirkungsgrad von lediglich 1,5 bis 2% und die geringere Leistung (derzeit sind etwa 1000W kommerziell erhältlich) und die schlechte Strahlqualität bzw. Fokussierbarkeit bei höheren Leisungen.

Bisher werden beim Festkörperlaser üblicherweise runde Laserstäbe (rods) eingesetzt. Ein runder Stabquerschnitt führt jedoch durch die Energiezufuhr des optischen Pumpens zu einem radialen Temperaturgradienten. Da unterschiedliche Temperaturen innerhalb des Stabs zu unterschiedlichen Brechungsindizes an verschiedenen Stellen des Stabs führen, bildet sich im Stab eine thermische Linse. Diese thermische Linse verschlechtert die Strahlqualität )hohe Divergenz) und wird ab einer gewissen Pumpleistung so stark, daß ein stabiler Resonator nicht mehr möglich ist.

Es wurden verschiedene Formen für den laseraktiven Festkörper vorgeschlagen, die von der üblichen Form des runden Stabes abweichen (z.B. FR-A-1356934 und Soviet Journal of Quantum Electronics 1,4 Jan.-Feb. 1972, 369 ff).

Dabei wird der Strahl in polygonförmigen Festkörpern mehrfach reflektiert (teilweise unter Ausnutzung der verlustarmen Totalreflexion an Grenzflächen), so daß man im laseraktiven Medium einen möglichst langen Strahlweg erhält. Die Strahlweglänge wird dann noch weiter vergrössert, indem man mehrere solche polygonförmige Scheiben aufeinander setzt und den Strahl nacheinander diese diese Scheiben durchlaufen läßt.

Aufgrund des langen Strahlweges könnte man so theoretisch Laser mit hoher Ausgangsleistung erwarten. Bei optischen Inhomogenitäten (Brechungsindexvariationen, bedingt durch thermische Gradienten) bedeutet ein längerer Strahlweg jedoch eine entsprechend stärkere Verschlechterung der Strahlqualität.

Außerdem sind die vorgeschlagenen Festkörper von den Abmessungen und von der Bearbeitung der Oberflächen nur schwer zu realisieren.

Im Hinblick auf die thermischen und die damit verbundenen optischen Probleme wurde außerden ein Laserstab mit rechteckigem Querschnitt, der sogenannte Slab-Festkörperlaser der US-PS 3,633,126; US-PS 4,214,716 entwickelt. In eine Stirnseite des Stabs, die vorzugsweise unter einem Brewster-Winkel orientiert ist, wird ein Lichtstrahl eingekoppelt, der im Inneren des Stabs an zwei sich gegenüberliegenden, totalreflektierenden Längsseiten des Stabs mehrmals reflektiert wird, bevor er aus der anderen Stirnseite austritt. Man erhält im Gegensatz zu dem Stab mit kreisrundem Querschnitt bei geeigneter Pumpgeometrie statt eines radialen Temperaturgradienten Isothermenebenenen mit günstigerer Wärmeabfuhr. Durch die erhöhte Wärmeabfuhr kann man eine höhere Laser-Ausgangsleistung erreichen. Durch den Zick-zack-Weg des Lichtstrahls im Inneren des Laserstabs durchläuft der Strahl die Temperaturgradienten in jeweils entgegengesetzter Richtung. Dadurch kompensiert sich die Wirkung der thermischen Linse in einer Achse. In der anderen Achse tritt wegen der ebenen Isothermen kein Gradient auf.

Der Slab-Laser erlaubt daher höhere Pumpleistungen und höhere Ausgangsleistungen bei guter Strahlqualität, aber der Wirkungsgrad ist durch die Pumpgeometrie niedriger als beim runden Laserstab.

Aufgabe der vorliegenden Erfindung ist es, einen Festkörperlaser-Stab für einen Festkörperlaser anzugeben, der höhere Pumpleistlungen und höhere Ausgangsleistungen bei einer Erhöhung des Wirkungsgrads gegenüber vergleichbaren Festkörperlasern gestattet, und außerdem eine gute Strahlqualität aufweist.

Diese Aufgabe wird durch die im Anspruch 1 angegebene Erfindung gelöst.

Während bei dem bekannten Slab-Laser der einen Zick-zack-Weg beschreibende Lichtstrahl im Inneren des Laserstabs eine Ebene definiert, definiert der durch die Erfindung vorgeschlagene schraubenförmige Lichtstrahlgang im Inneren des Laserstabs eine Vielzahl von Ebenen, abhängig von der Querschnittsform des Laserstabs. Vorzugsweise ist die Lichteintrittsfläche im Brewster-Winkel angeordnet, so daß achsparallel eingestrahlt werden kann. Das Einstrahlen erfolgt an einer Stelle der Lichteintrittsfläche, von der aus der Lichtstrahl zu einer reflektierenden Längsseitenfläche gelenkt wird, um von der dortigen Auftreff-Stelle zu einer Zweiten Längsseitenfläche des Stabs und von dort wieder zu einer dritten Längsseitenfläche des Stabs und dann gegebenenfalls zu weiteren Längsseitenflächen gelenkt zu werden. Der Lichtstrahl bildet im Inneren des Laserstabs also eine eckige Schraubenlinie, die sich umso mehr der Kreisform nähert, je mehr Längsseitenflächen der im Querschnitt polygonförmige Laserstab aufweist.

Bei jedem Umlauf, d.h. bei jedem Schraubengang von 360°, wird der Strahl bei geeigneter Steigung in sich gedreht. Durch diese Drehung mitteln sich die optischen Inhomogenitäten auf dem Strahlweg heraus. Die unerwünschten Gradienten werden so weitgehend kompensiert, ohne daß durch eine ungünstige Pumpgeometrie der Wirkungsgrad verschlechtert wird wie beim Slab-Laser.

Gegenüber dem runden Laserstab ist sogar ein höherer Wirkungsgrad zu erwarten, da der Strahlweg im Stab länger ist. Dies gilt um so mehr bei mehrfachem Strahldurchlauf mit versetzten Strahlwegen.

Der Querschnitt des Laserstabs kann praktisch jede beliebige Form aufweisen, solange der den Stab durchsetzende Strahl eine Schraubenlinie beschreibt. Vorzugsweise ist der Querschnitt jedoch quadratisch, wobei der Strahl derart in die Lichteintrittsfläche eingeleitet wird, daß der von dem Strahl im Laserstab beschriebene Schraubengang im Querschnitt ebenfalls quadratisch ist, oder gleichseitig dreieckig mit einer Schraubenlinie, die, in Längsrichtung betrachtet, ein gleichseitiges Dreieck als Querschnitt hat. Bei beliebigen Dreiecken könne auch andere, nicht schraubenförmige, aber räumliche Bahnen auftreten.

Im Prinzip ist auch eine Querschnittsform mit mehr als vier Kanten möglich.

In an sich bekannter Weise kann statt der Lichtaustrittsfläche ein Dachkantprisma vorgesehen sein, so daß der Strahl in dem Stab hin- und zurüchläuft.

Man kann mehrere Lichtstrahlen an verschiedenen Stellen der Lichteintrittsfläche einkoppeln, so daß sich im Inneren des Laserstabs mehrere schraubenförmige Strahlengänge ergeben. Durch geeignete Geometrie wird erreicht, daß sich die Strahlen an keiner Stelle kreuzen.

Achsparallele Strahlein- und Austritte kann man durch geeignete Endstücke auch ohne Anwendung des Brewsterwinkels erreichen. Auch bei Verwendung solcher Endstücke kann man durch die Verwendung eines Dachkantprismas den Strahl so umlenken, daß er einen weiteren Durchlauf durch den Stab auf einem versetzten Strahlweg macht.

Im folgenden werden Ausführungsbeispiele der Erfindung anhand der Zeichnung näher erläutert. Es zeigen:

Fig. 1 eine perspektivische Ansicht eines quadratischen Laserstabs,

Fig. 2 eine Seitenansicht des Laserstabs,

Fig. 3 eine Ansicht des Laserstabs nach Fig. 2 von rechts,

Fig. 4 eine Schnittansicht entlang der Linie IV-IV in Fig. 3,

Fig. 5 eine Seitenansicht des gesamten, in Fig. 3 und Fig. 2 teilweise dargestellten Laserstabs.

Fig. 6 ein Endstück zur Strahlumlenkung, so daß die Strahlen achsparallel austreten,

Fig. 7 eine perspektivische Ansicht des Endstücks, und

Fig. 8 eine Endstück mit Dachkantprisma, das den Strahl in den Stab zurücklenkt.

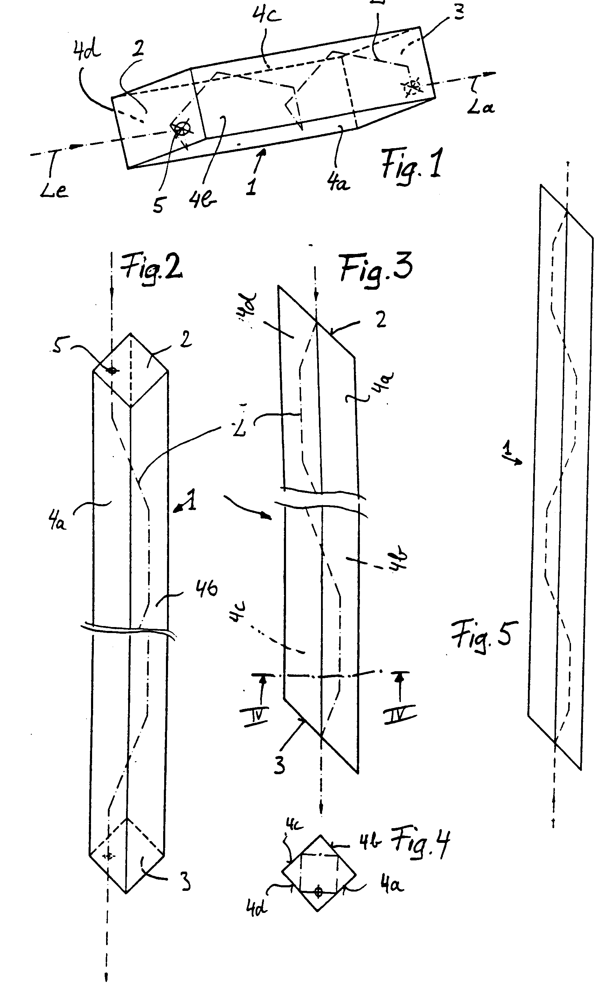

Das in Fig. 1 dargestellte erste Ausführungsbeispiel der Erfindung besteht aus einem aus geeignetem Lasermaterial bestehenden Festkörperlaser-Stab 1 quadratischen Querschnittes mit zwei Stirnseiten, die eine Lichteintrittsfläche 2 und eine Lichtaustrittsfläche 3 bilden, sowie mit vier Längsseitenflächen 4a, 4b, 4c und 4d.

Die Stirnseiten 2 und 3 sind in Bezug auf die Stab-Längsachse im Brewster-Winkel angeordnet. Die Längsseitenflächen 4a - 4d sind als totalreflektierende Flächen ausgebildet.

Ein Lichtstrahl Le trifft achsparallel (bezogen auf die Stab-Längsachse) an einer Stelle 5 auf die Lichteintrittsfläche 2 auf. Im Inneren des Stabs wird der Lichtstrahl L zur in Fig. 1 unten dargestellten Längsseitenfläche 4a hin abgelenkt, dort schräg zur benachbarten Längsseitenfläche 4d hin reflektiert, von der Längsseitenfläche 4d wiederum schräg zur Lichtaustrittsfläche 3 gegen die obere Längsseitenfläche 4c reflektiert, um dann wieder -wiederum schräg in Richtung auf die Lichtaustrittsfläche 2 hin- auf die Längsseitenfläche 4a gelenkt zu werden. Somit bildet der Lichtstrahl L im Inneren des Laserstabs 1 eine Raumkurve, die man als "eckige Schraubenkurve" bezeichnen kann.

Nachdem der Lichtsrtrahl L den beschriebenen Weg zwischen den Längsseitenflächen 4a, 4d, 4c, 4b, 4a ... mehrmals durchlaufen hat, trifft er auf die Lichtaustrittsfläche 3, um -wegen des Brewster-Winkels der Lichtaustrittsfläche 3 in Bezug auf die Stab-Längsalchse- als Lichtstrahl La des Laserstab zu verlassen. Im vorliegenden Fall hat die eckige Schraubenlinie zwei Windungen, d.h. nach zwei Umläufen um die optische Achse verläßt der Strahl den Stab durch die Austrittsfläche.

Die Fig. 2 bis 4 zeigen die drei Seitenansichten des Laserstabes. Der Laserstab 1 hat quadratischen Querschnitt. Die Lichteintrittsfläche 2 und die Lichtaustrittsfläche 3 sind im Brewster-Winkel bezüglich der Stab-Längsachse angeordnet. Wie aus den Fig. 2 bis 5 hervorgeht, vollzieht der Lichtstrlahl L im Inneren des Laserstabs 1 eine eckige, schraubenförmige Raumkurve, indem er unter spitzem Winkel zur Lichtaustrittsfläche 3 an den vier Längsseitenflächen 4a, 4b, 4c und 4d totalreflektiert wird.

Wie aus Fig. 4 ersichtlich, hat die eckige Schraubenkurve des Lichtstrahls L im Inneren des Laserstabs 1 einen quadratischen Querschnitt, wobei das Quadrat symmetrisch zu den beiden Querachsen des Laserstabs in den Stab eingeschrieben ist.

Die Erfindung ist nicht auf die beiden oben beschriebenen Ausführungsbeispiele beschränkt. Statt der Lichtaustrittsfläche 3 kann ein Dachkantprisma vorgesehen sein, so daß der Strahl im Inneren des Laserstabs zurückläuft. Es können auch mehrere separate Lichtstrahlen in die Lichteintrittsfläche 2 bzw. 3 eingekoppelt werden. Nach Fig. 2 könnte man eine weitere Lichteintrittsstelle gegenüber der Lichteintrittsstelle 5 vorsehen, symmetrisch zu der gestrichelten Linie. Statt zwei Lichtstrahlen können auch vier Lichtstrahlen eingekoppelt werden. Durch Einkopplung von zwei bzw. vier Strahlen erhält man entsprechend zwei bzw. vier eckig-schraubenförmige Bahnen im Stab, die gegeneinander verschoben sind, so daß das Volumen des Stabes möglichst vollständig ausgeleuchtet wird.

Wenn man vier Lichtstrahlen gegeneinander versetzt und schraubenförmig durch den Stab leiten will, kann man an den Endflächen nicht mit dem Brewsterwinkel arbeiten. Bei geraden Endflächen würden die Strahlen jedoch unter einem Winkel von z.B. 45° zur Achse in vier verschiedene Richtungen (jeweils um 90° verdreht) austreten. Für den Einbau in einem wassergekühlten Rumplampengehäuse ist das ungünstig.

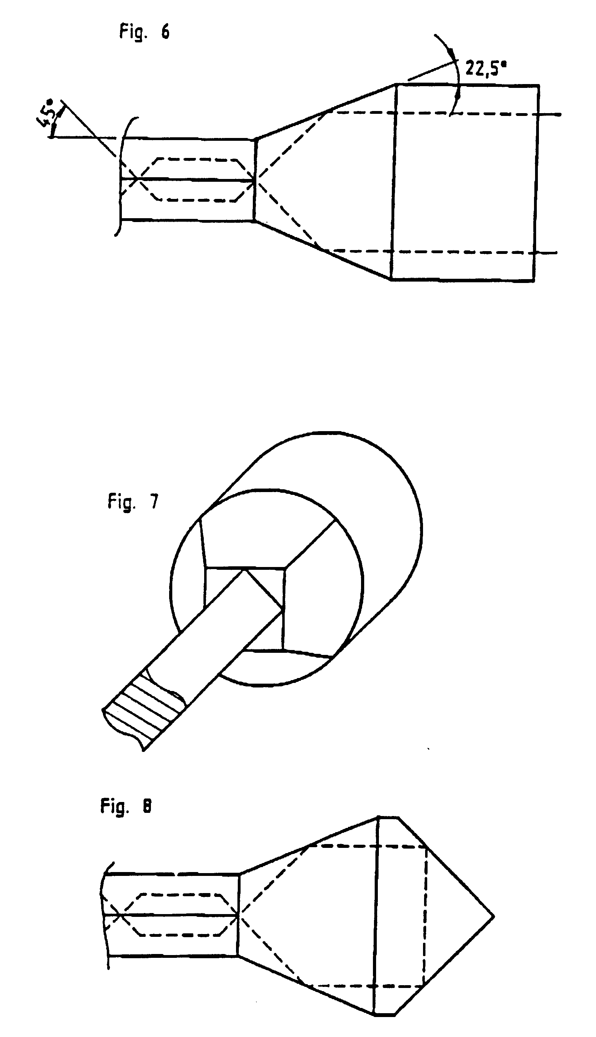

Durch geeignete Endstücke kann man die Strahlen wieder in Achsrichtung umlenken. Fig. 6 zeigt eine solche Anordnung.

Von den vier Strahlen sind nur zwei eingezeichnet. Die zwei Strahlen treten unter 45° aus der Endfläche des Stabes aus und werden an den Flächen eines Zylinderstumpfes in Achsenrichtung reflektiert. Fig. 7 zeigt das gleiche Endstück in perspektivischer Darstellung.

Wenn die Strahlen nicht austreten sondern durch den Stab zurücklaufen sollen, kann man das Endstück als Dachkantprisma ausbilden. (Fig. 8).

**Patentansprüche**

1. Festkörperlaser mit einem Stab (1) aus einem aktiven Lasermaterial mit mindestens drei planen, totalreflektierenden Längsseitenflächen (4a - d), an denen ein in eine als Lichteintrittsfläche dienende Stirnseite (2) eingetretener Laserstrahl (L) wiederholt totalreflektiert wird, bevor der Strahl durch eine Lichtaustrittsfläche, die durch die andere Stirnseite des Stabs (3), oder -wenn diese zum Beispiel als Dachkantenprisma ausgebildet ist- ebenfalls durch die eine Stirnseite (2) gebildet wird, aus dem Stab (1) austritt, und mit folgenden Merkmalen:
   a) der Querschnitt der Stabs (1) ist polygonförmig;
   b) der Laserstrahl wird unter einem solchen Winkel und an einer solchen Stelle (5) in die Lichteintrittsfläche (2) eingestrahlt, daß er an den Längsseitenflächen (4a - d) totalreflektiert wird und innerhalb des Stabs (1) einen eckigen Schraubengang beschreibt, und
   c) die Länge des Stabs (1) ist so bemessen, daß die schraubenförmige Bahn eine ganzzahlige Anzahl von Windungen beschreibt.

2. Festkörperlaser nach Anspruch 1, dadurch **gekennzeichnet**, daß der Stab (1) einen quadratischen Querschnitt hat.

3. Festkörperlaser nach Anspruch 1, dadurch **gekennzeichnet**, daß der Stab (1) einen dreieckigen Querschnitt aufweist.

4. Festkörperlaser nach einem der Ansprüche 1 bis 3, dadurch **gekennzeichnet**, daß zumindest die Lichteintrittsfläche (2) im Brewster-Winkel angeordnet ist.

5. Festkörperlaser nach einem der Ansprüche 1 bis 4, dadurch **gekennzeichnet**, daß mehrere Laserstrahlen über die Lichteintrittsfläche (2) in den Laserstab an verschiedenen Stellen der Lichteintrittsfläche (2) eingestrahlt werden.

6. Festkörperlaser nach einem oder mehreren der Ansprüche 1 bis 5, dadurch **gekennzeichnet**, daß an den Stirnseiten des Stabs (3) prismatische Endstücke angeordnet sind, die einen achsparallelen Strahleintritt bzw. -austritt bewirken.

7. Festkörperlaser nach Anspruch 6, dadurch **gekennzeichnet**, daß eines der Endstücke zur Strahlumlenkung mit einem Dachkantprisma kombiniert ist.

8. Festkörperlaser nach Anspruch 6 oder 7, dadurch **gekennzeichnet**, daß das Endstück die Form eines Pyramidenstumpfes hat, dessen Grundfläche in einem zylindrischen Teil übergeht, durch den Licht ein- bzw. austritt.

**Claims**

1. Solid-state laser with a rod (1) made of an active laser material with at least three plane, totally reflecting longitudinal side faces (4a-d), at which a laser beam (L) entering through an end face (2) serving as a light-entry face is repeatedly totally reflected, before the beam emerges from the rod through a light-exit face, which is formed by the other end face (3) of the rod, or - where for example the rod is in the form of a roof prism - back through the one end face (2), and with the following features:

a) the cross-section of the rod (1) is polygonal;

b) the laser beam is fed into the light-entry face (2) at such an angle and at such a point (5) that it is totally reflected at the longitudinal side faces (4a-d) and describes an angled helical path within the rod (1), and

c) the length of the rod (1) is such that the helical path makes an integral number of revolutions.

2. Solid-state laser according to claim 1, characterised in that the rod (1) has a four-sided cross-section.

3. Solid-state laser according to claim 1, characterised in that the rod (1) has a triangular cross-section.

4. Solid-state laser according to one of claims 1 to 3, characterised in that at least the light-entry face (2) is arranged at the Brewster angle.

5. Solid-state laser according to one of claims 1 to 4, characterised in that a number of laser beams are fed into the laser rod through the light-entry face (2) at different points in the light-entry face (2).

6. Solid-state laser according to one or more of claims 1 to 5, characterised in that prismatic end-pieces which achieve beam entry and/or exit parallel to the axis are arranged on the end faces (3) of the rod.

7. Solid-state laser according to claim 6, characterised in that one of the end-pieces is combined with a roof prism to deflect the beam.

8. Solid-state laser according to claim 6 or 7, characterised in that the end-piece has the shape of a frustum of a pyramid, of which the base surface merges into a cylindrical portion through which the light enters or emerges.

**Revendications**

1. Laser à solide muni d'un barreau (1) en un matériau présentant l'activité laser et d'au moins quatre surfaces (4a à 4d) planes à réflexion totale et à faces longues, surfaces sur lesquelles un rayon laser (L) pénétrant sur une face frontale servant de surface d'entrée de la lumière, est réfléchi totalement de façon répétitive, avant que le rayon ne sorte du barreau (1) à travers une surface de sortie de lumière qui est conçue comme l'autre face frontale (3), ou également à travers la première face frontale, si celle-ci est conçue comme un prisme à côtés en forme de toit, de façon à présenter les caractéristiques suivantes :

a) la section du barreau (1) est de forme polygonale ;

b) le rayon laser irradie dans la face d'entrée de lumière sous un angle et en un emplacement (5) tels qu'il subit une réflexion totale sur la face latérale (4a à 4d) présentant une grande longueur et qu'il décrit un parcours hélicoïdal en ligne brisée à l'intérieur du barreau (1) ;

c) la longueur du barreau (1) est dimensionnée de telle sorte que le parcours hélicoïdal décrive un nombre entier de spires ou déflexions.

2. Laser à solide selon la revendication 1, caractérisé en ce que le barreau (1) présente une section carrée.

3. Laser à solide selon la revendication 1, caractérisé en ce que le barreau (1) présente une section triangulaire.

4. Laser à solide selon l'une des revendication 1 à 3, caractérisé en ce qu'au moins la surface d'entrée (2) de la lumière est disposée selon l'angle de Brewster.

5. Laser à solide selon l'une des revendications 1 à 4 caractérisé en ce que plusieurs rayons laser sont irradiés par la face d'entrée (2) de lumière dans le barreau laser, en différents emplacements de la face d'entrée (2).

6. Laser à solide selon l'une ou plusieurs des revendications 1 à 5, caractérisé en ce que des pièces terminales prismatiques sont disposées sur les faces frontales du barreau (3) de manière à réaliser une entrée ou une sortie de rayonnement qui soit axialement parallèle.

7. Laser à solide selon la revendication 6, caractérisé en ce que l'un des pièces terminales, prévue pour la déviation du rayonnement, est combinée avec un prisme présentant deux arêtes en forme de toit.

8. Laser à solide selon la revendication 6 ou 7, caractérisé en ce que la pièce terminale présente la forme d'un tronc de pyramide dont la surface de base se prolonge par une partie cylindrique à travers laquelle la lumière entre ou sort.

Fig.1

Fig.2

Fig.3

Fig.4

Fig.5

Fig. 6

22,5°

45°

Fig. 7

Fig. 8